# EUROPEAN PATENT APPLICATION

(11) **EP 3 800 810 A1**
(43) Date of publication of application: **07.04.2021**
(21) Application number: 18931622.7
(22) Date of filing: 27.08.2018
(51) Int. Cl.: H04J 14/02, H04B 10/25

(54) **LIGHT RECEIVING AND COMBINED TRANSCEIVING COMPONENTS, COMBINED OPTICAL MODULE, COMMUNICATION DEVICE AND PON SYSTEM**

(71) Applicant: HUAWEI TECHNOLOGIES CO., LTD., Shenzhen, Guangdong 518129 (CN)
(72) Inventor: WEI, Zhang, Shenzhen, Guangdong 518129 (CN); LIU, Peng, Shenzhen, Guangdong 518129 (CN); XU, Aimin, Shenzhen, Guangdong 518129 (CN); LI, Xiguang, Shenzhen, Guangdong 518129 (CN); KANG, Jingran, Shenzhen, Guangdong 518129 (CN); LING, Wei, Shenzhen, Guangdong 518129 (CN)
(74) Representative: Pfenning, Meinig & Partner mbB
(86) International application number: PCT/CN2018/102564
(87) International publication number: WO 2020/041953

(57) **Abstract**

Embodiments of this application provide a receiver optical subassembly, a combo transceiver subassembly, a combo optical module, a communications apparatus, and a PON system, and relate to the field of optical communications technologies. The receiver optical subassembly includes an optical receiving housing, and a first optical receiver, a second optical receiver, and a first glass are packaged in the optical receiving housing. The first glass is disposed obliquely relative to an optical receiving direction, and includes a light incident surface and a light emergent surface. The first optical receiver and the second optical receiver are opposite to the light emergent surface of the first glass. A first light splitting film is disposed on the light emergent surface of the first glass. A first reflective film is disposed on the light emergent surface of the first glass. The first light splitting film can transmit an optical signal of a first wavelength and reflect an optical signal of a second wavelength.

## Description

### TECHNICAL FIELD

This application relates to the field of optical communications technologies, and in particular, to a receiver optical subassembly, a combo transceiver subassembly, a combo optical module, a communications apparatus, and a passive optical network system.

### BACKGROUND

With development of modern societies, explosive growth of information volumes, and especially the advent of the big data era, there are growing requirements on network throughput capabilities. With unique features such as ultra-high bandwidth and low electromagnetic interference, optical transmission has gradually become a mainstream solution for modern communication. In particular, networks newly established currently, for example, an access network represented by fiber to the home, are being deployed on a large scale.

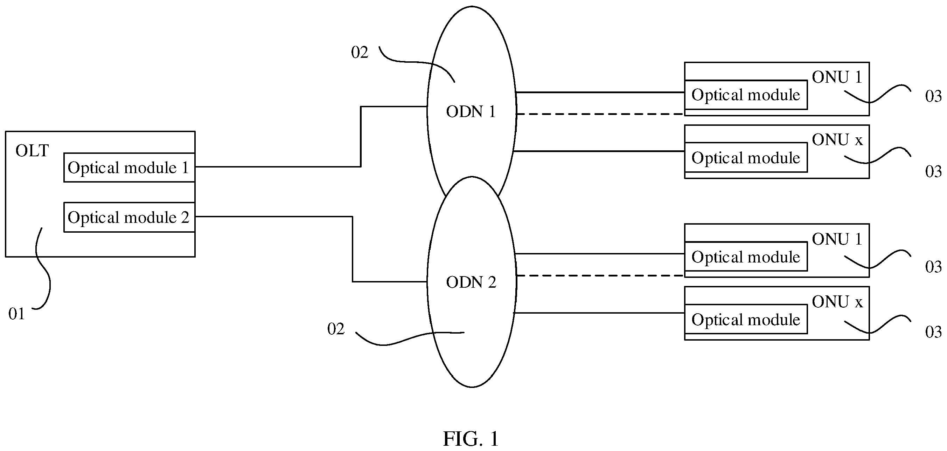

An optical communications network applied to an access network scenario mainly exists in a form of a passive optical network (Passive Optical Network, PON). In an overall situation in which optical networks are fully popularized, deployment of a large quantity of PON networks requires a same huge quantity of communications devices. A related communications device such as an optical line terminal (Optical Line Terminal, OLT) mainly includes an optical module, and a board and a subrack that are used to place the optical module. As shown in FIG. 1, one optical module in an optical line terminal 01 corresponds to one optical distribution network (Optical distribution network, ODN) 02, and serves a specific quantity of optical network units (Optical Network Unit, ONU) 03. In FIG. 1, one optical distribution network 02 corresponds to x optical network units 03 (ONU1 to ONUx). Each optical network unit 03 may represent one user, and is used as a key subassembly in an optical network. Optical modules in the optical line terminal 01 and the optical network unit 03 are responsible for performing optical-to-electrical conversion on and transmitting a network signal, and are a basis for normal communication of an entire network.

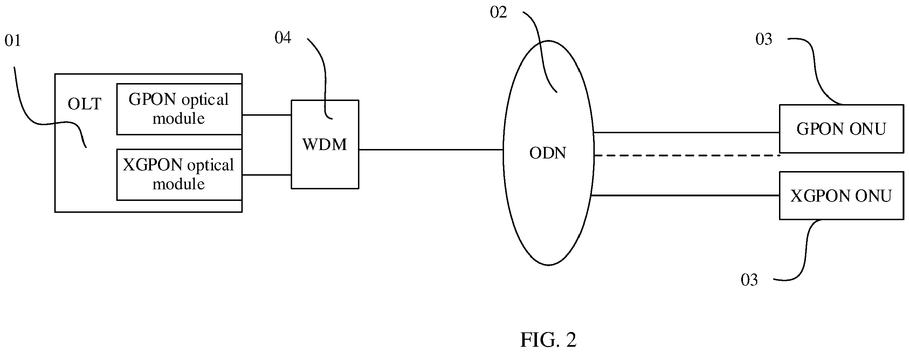

Currently, PON networks deployed on a large scale include two types: an Ethernet passive optical network EPON (Ethernet Passive Optical Network, EPON) and a gigabit passive optical network (Gigabit Passive Optical Network, GPON). These two types of optical networks support a rate of 2.5 Gbit/s or 1.25 Gbit/s. With an upgrade of network bandwidth, next-generation networks to be deployed are a lOG-EPON and a lOG-GPON (which may also be referred to as an XGPON), and support a rate of 10 Gbit/s. The following uses a GPON as an example for description. An EPON scenario may be similar. In terms of a wavelength of an optical signal, an optical line terminal in a GPON uses 1490 nanometers for transmitting and 1310 nanometers for receiving, and an optical line terminal in an XGPON uses 1577 nanometers for transmitting and 1270 nanometers for receiving. Assuming that a 10G upgrade is performed in a current GPON network, it is unlikely to reconstruct an ODN network, and therefore service expansion needs to be performed in an existing network. The following scenario inevitably exists: On a user side, some users intend to upgrade to the XGPON, and some users do not intend to upgrade. In this case, a case shown in FIG. 2 occurs, and both GPON and XGPON services exist in a same optical distribution network 02. As shown in FIG. 2, an optical module in some optical network units 03 is a GPON optical module, and an optical module in other optical network units 03 is an XGPON optical module. This involves a problem that the XGPON coexists with original large-scale GPON optical subassemblies. On a side of the optical line terminal 01, these two types of OLT optical modules are also required: the GPON optical module and the XGPON optical module. In such a networking environment, a wavelength division multiplexing (wavelength division multiplexing, WDM) module 04 is used to perform multiplexing on uplink and downlink wavelengths of the GPON and the XGPON. However, in actual application, if the WDM module 04 is disposed externally, as shown in FIG. 2, construction costs are high, large equipment room space is occupied, construction and cabling are complex, and management and maintenance are difficult.

### SUMMARY

Embodiments of this application provide a receiver optical subassembly, a transmitter optical subassembly, a combo transceiver subassembly, a combo optical module, a communications apparatus, and a passive optical network system, so that during multiplexing on uplink and downlink wavelengths, construction costs are lower, less equipment room space is occupied, construction and cabling are simple, and management and maintenance are convenient.

To achieve the foregoing objectives, the following technical solutions are used in the embodiments of this application:
According to a first aspect, this application provides a receiver optical subassembly, including an optical receiving housing. A first optical receiver, a second optical receiver, and a first glass are packaged in the optical receiving housing, and the first glass is disposed obliquely relative to optical receiving paths of the first optical receiver and the second optical receiver. The first glass includes a light incident surface and a light emergent surface, and the first optical receiver and the second optical receiver are disposed opposite to the light emergent surface of the first glass. A first light splitting film is disposed on the light emergent surface of the first glass, and the first light splitting film is located on the optical receiving path of the first optical receiver, and can transmit an optical signal of a first wavelength and reflect an optical signal of a second wavelength. A first reflective film is disposed on a part of the light incident surface of the first glass. The optical signal of the first wavelength and the optical signal of the second wavelength are sent into the first glass from the light incident surface, refracted inside the first glass, and then sent to the first light splitting film. The optical signal of the first wavelength is transmitted through the first light splitting film and enters the first optical receiver, and the optical signal of the second wavelength is sequentially reflected by the first light splitting film and the first reflective film and then sent from the light emergent surface, and enters the second optical receiver.

According to the receiver optical subassembly provided in this embodiment of this application, the first glass is used, the first reflective film is disposed on the light incident surface of the first glass, and the first light splitting film is disposed on the light emergent surface. In addition, the first glass is disposed obliquely relative to the optical receiving paths of the first optical receiver and the second optical receiver. Therefore, after the optical signal of the first wavelength and the optical signal of the second wavelength are sent into the first glass along an optical receiving direction, the optical signal of the first wavelength may be transmitted through the first light splitting film and enter the first optical receiver, and the optical signal of the second wavelength is sequentially reflected by the first light splitting film and the first reflective film and then sent from the light emergent surface, and enters the second optical receiver. In this way, an emergent position of the optical signal of the second wavelength may be separated from an emergent position of the optical signal of the first wavelength by a specific distance, to meet a requirement for a mounting spacing between the first optical receiver and the second optical receiver, thereby implementing receiving of optical signals of different wavelengths based on the wavelengths. In addition, because the first optical receiver, the second optical receiver, and the first glass are all packaged in the same optical receiving housing, and the first light splitting film on the first glass performs a function of demultiplexing, a demultiplexing apparatus is internally disposed. Therefore, this reduces construction costs, reduces occupied equipment room space, simplifies construction and cabling, and facilitates management and maintenance.

In a possible implementation, a second reflective film is further disposed on the light emergent surface of the first glass, and the second reflective film is disposed by keeping away from the optical receiving path of the second optical receiver, and is located between the optical receiving path of the first optical receiver and the optical receiving path of the second optical receiver. After the optical signal of the second wavelength is reflected by the first light splitting film, the optical signal is sequentially reflected between the first reflective film and the second reflective film and sent from the light emergent surface, and enters the second optical receiver. In this way, signal receiving can be satisfied when the mounting spacing between the first optical receiver and the second optical receiver is relatively large.

In a possible implementation, an angle of incidence at which the optical signal of the first wavelength and the optical signal of the second wavelength are sent into the first glass is less than or equal to 12°. Therefore, light splitting isolation is ensured.

In a possible implementation, an angle of incidence at which the optical signal of the first wavelength and the optical signal of the second wavelength are sent into the first glass is 8° to 12°. In this way, not only light splitting isolation is ensured, but also a loss of the optical signal of the second wavelength is relatively small.

In a possible implementation, an angle of incidence at which the optical signal of the first wavelength and the optical signal of the second wavelength are sent into the first glass is 8°.

In a possible implementation, a thickness of the first glass is 0.2 to 2 millimeters. Therefore, it is easy to produce the first glass, costs are low, and an overall size can easily meet a packaging size requirement of an SFP+.

In a possible implementation, a thickness of the first glass is 1.6 millimeters.

In a possible implementation, a first collector lens is disposed between the light emergent surface of the first glass and the first optical receiver, and the first collector lens is disposed on the optical receiving path of the first optical receiver; and a second collector lens is disposed between the light emergent surface of the first glass and the second optical receiver, and the second collector lens is disposed on the optical receiving path of the second optical receiver. Therefore, receiving efficiency of the first optical receiver and the second optical receiver can be improved, and an optical loss can be reduced.

In a possible implementation, an antireflective film is disposed on the light emergent surface of the first glass.

In a possible implementation, the optical receiving housing is a transistor-outline can, the transistor-outline can includes a header and a cap, both the first optical receiver and the second optical receiver are disposed on the header, and the first glass forms a transparent window of the cap. Therefore, this is compatible with an existing TO packaging process, to avoid producing a special complex housing, thereby reducing producing costs.

In a possible implementation, the optical receiving housing is a packaging box, a transparent window is formed on the packaging box, and the first optical receiver, the second optical receiver, and the first glass are all disposed in the packaging box; and the light incident surface of the first glass is opposite to the transparent window of the packaging box. Therefore, a tilt angle and a position of the first glass may be finely adjusted in an active coupling manner, so that the first glass is disposed at a more precise position, and receiving efficiency of the receiver optical subassembly is higher.

According to a second aspect, this application provides a transmitter optical subassembly. The transmitter optical subassembly includes an optical transmitting housing, and a first optical transmitter, a second optical transmitter, and a second glass that are packaged in the optical transmitting housing. The second glass is disposed obliquely relative to optical transmitting paths of the first optical transmitter and the second optical transmitter, the second glass includes a light incident surface and a light emergent surface, and the light incident surface of the second glass is disposed opposite to the first optical transmitter and the second optical transmitter. A second light splitting film is disposed on the light incident surface of the second glass, a third reflective film is disposed on a part of the light emergent surface of the second glass, and the second light splitting film is located on the transmitting path of the first optical transmitter and located on a reflecting path of the third reflective film. The second light splitting film can transmit an optical signal of a third wavelength and can reflect an optical signal of a fourth wavelength, and the optical signal of the third wavelength that is sent by the first optical transmitter is transmitted by the second light splitting film, then enters the second glass, and is refracted inside the second glass and then sent from the light emergent surface of the second glass. The optical signal of the fourth wavelength that is sent by the second optical transmitter enters the second glass, and is sequentially reflected by the second reflective film and the second light splitting film and then sent from the light emergent surface of the second glass, and an emergent position of the optical signal of the third wavelength overlaps an emergent position of the optical signal of the fourth wavelength.

In a possible implementation of the second aspect, a fourth reflective film is further disposed on the light incident surface of the second glass, and the fourth reflective film is disposed by keeping away from the optical transmitting path of the first optical transmitter and the optical transmitting path of the second optical transmitter, and is located between the optical transmitting path of the first optical transmitter and the optical transmitting path of the second optical transmitter. After the optical signal of the fourth wavelength enters the second glass, the optical signal is sequentially reflected between the third reflective film and the fourth reflective film and then enters the second light splitting film; and the optical signal of the fourth wavelength is reflected by the second light splitting film and then sent from the light emergent surface of the second glass. In this way, signal sending can be satisfied when the mounting spacing between the first optical transmitter and the second optical transmitter is relatively large.

In a possible implementation of the second aspect, the optical transmitting housing is a transistor-outline can, the transistor-outline can includes a header and a cap, the first optical transmitter and the second optical transmitter are both disposed on the header, and the second glass forms a transparent window of the cap.

In a possible implementation of the second aspect, the optical transmitting housing is a packaging box, a transparent window is formed on the packaging box, and the first optical transmitter, the second optical transmitter, and the second glass are all disposed in the packaging box; and the light emergent surface of the second glass is opposite to the transparent window of the packaging box. Therefore, a tilt angle and a position of the second glass may be finely adjusted in an active coupling manner, so that the second glass is disposed at a more precise position, and transmitting efficiency of the transmitter optical subassembly is higher.

According to a third aspect, this application provides a combo transceiver subassembly, including:
a receiver optical subassembly, where the receiver optical subassembly is the receiver optical subassembly in any technical solution of the first aspect.

In a possible implementation of the third aspect, the combo transceiver subassembly further includes a combo package housing. An optical transmission channel is disposed in the combo package housing, and an optical demultiplexer is disposed in the optical transmission channel. An optical receive port, an optical transmit port, and an optical fiber connection port in communication with the optical transmission channel are disposed on the combo package housing. The receiver optical subassembly is packaged at the optical receive port. The optical demultiplexer can reflect, to the optical receive port, an optical signal of a first wavelength and an optical signal of a second wavelength that enter through the optical fiber connection port.

In a possible implementation of the third aspect, a transmitter optical subassembly is packaged at the optical transmit port, and the transmitter optical subassembly is the transmitter optical subassembly in any technical solution of the second aspect.

In a possible implementation of the third aspect, a first optical transmit port and a second optical transmit port are disposed on the combo package housing, a third optical transmitter is packaged at the first optical transmit port, a fourth optical transmitter is packaged at the second optical transmit port, and an optical multiplexer is disposed on the optical transmission channel. The optical multiplexer can combine an optical signal of a third wavelength that is sent by the third optical transmitter and an optical signal of a fourth wavelength that is sent by the fourth optical transmitter, and send the combined optical signals to the optical fiber connection port.

In a possible implementation of the third aspect, the optical multiplexer is a glass optical multiplexer, the optical signal of the third wavelength that is sent by the third optical transmitter is transmitted by the glass optical multiplexer and then enters the optical fiber connection port, and the optical signal of the fourth wavelength that is sent by the fourth optical transmitter is reflected by the glass optical multiplexer and then enters the optical fiber connection port.

In a possible implementation of the third aspect, a collimation lens is disposed at the optical fiber connection port.

According to a fourth aspect, this application provides a combo transceiver subassembly, including:
a transmitter optical subassembly, where the transmitter optical subassembly is the transmitter optical subassembly in any technical solution of the second aspect.

According to a fifth aspect, this application provides a combo transceiver subassembly, including:
a receiver optical subassembly, where the receiver optical subassembly is the receiver optical subassembly in any technical solution of the first aspect; and
a transmitter optical subassembly, where the transmitter optical subassembly is the transmitter optical subassembly in any technical solution of the second aspect.

According to the combo transceiver subassembly provided in this embodiment of this application, the first glass is used, the first reflective film is disposed on the light incident surface of the first glass, and the first light splitting film is disposed on the light emergent surface. In addition, the first glass is disposed obliquely relative to the optical receiving paths of the first optical receiver and the second optical receiver. Therefore, after the optical signal of the first wavelength and the optical signal of the second wavelength are sent into the first glass along an optical receiving direction, the optical signal of the first wavelength may be transmitted through the first light splitting film and enter the first optical receiver, and the optical signal of the second wavelength is sequentially reflected by the first light splitting film and the first reflective film and then sent from the light emergent surface, and enters the second optical receiver. In this way, an emergent position of the optical signal of the second wavelength may be separated from an emergent position of the optical signal of the first wavelength by a specific distance, to meet a requirement for a mounting spacing between the first optical receiver and the second optical receiver, thereby implementing receiving of optical signals of different wavelengths based on the wavelengths. In addition, because a structure of disposing the light splitting film and the reflective film on the first glass is simple, production costs are low and mass production can be performed. In addition, the first glass occupies a small volume and a package structure is more compact, so that a packaging size requirement of an SFP+ is easily satisfied.

According to a sixth aspect, this application provides a combo optical module, including the receiver optical subassembly according to the first aspect, or including the transmitter optical subassembly according to the second aspect, or including an electrical subassembly and the combo transceiver subassembly in any technical solution of the third aspect, the fourth aspect, and the fifth aspect, where the electrical subassembly is electrically connected to a receiver optical subassembly and a transmitter optical subassembly of the combo transceiver subassembly.

According to a seventh aspect, this application provides a communications apparatus, including the combo optical module in the technical solution of the sixth aspect.

In a possible implementation of the seventh aspect, the communications apparatus is an optical line terminal or an optical network unit.

In a possible implementation of the seventh aspect, the optical line terminal further includes a board and a subrack that are used to place the combo optical module.

According to an eighth aspect, this application provides a passive optical network system, including:
an optical line terminal, where the optical line terminal is the optical line terminal in any technical solution of the seventh aspect;
an optical distribution network, where the optical distribution network is connected to the optical line terminal; and
a plurality of optical network units, where the plurality of optical network units are connected to the optical distribution network.

In a possible implementation of the eighth aspect, optical modules of at least some of the plurality of optical network units are GPON optical modules, and optical modules of at least some of the plurality of optical network units are XGPON optical modules; or
optical modules of at least some of the plurality of optical network units are EPON optical modules, and optical modules of at least some of the plurality of optical network units are lOG-EPON optical modules; or
optical modules of at least some of the plurality of optical network units are the combo optical module in the technical solution of the sixth aspect.

It can be understood that when a non-combo optical module is used as the optical network unit, each optical module in the plurality of optical network units may include at least two of a GPON optical module, an XGPON optical module, a 25G-GPON optical module, and a 50G-GPON optical module, or each optical module in the plurality of optical network units may include at least two of an EPON optical module, a lOG-EPON optical module, a 25G-EPON optical module, and a 50G-EPON optical module. When the combo optical module is used as the optical network unit, the combo optical module may simultaneously support any two of a GPON, an XGPON, a 25G GPON, and a 50G GPON, or simultaneously support any two of an EPON, a 10G EPON, a 25G EPON, and a 50G EPON.

According to the combo optical module, the communications apparatus, and the passive optical network system provided in the embodiments of this application, the first glass is used in the receiver optical subassembly, the first reflective film is disposed on the light incident surface of the first glass, and the first light splitting film is disposed on the light emergent surface. In addition, the first glass is disposed obliquely relative to the optical receiving paths of the first optical receiver and the second optical receiver. Therefore, after the optical signal of the first wavelength and the optical signal of the second wavelength are sent into the first glass along an optical receiving direction, the optical signal of the first wavelength may be transmitted through the first light splitting film and enter the first optical receiver, and the optical signal of the second wavelength is sequentially reflected by the first light splitting film and the first reflective film and then sent from the light emergent surface, and enters the second optical receiver. In this way, an emergent position of the optical signal of the second wavelength may be separated from an emergent position of the optical signal of the first wavelength by a specific distance, to meet a requirement for a mounting spacing between the first optical receiver and the second optical receiver, thereby implementing receiving of optical signals of different wavelengths based on the wavelengths. In addition, because a structure of disposing the light splitting film and the reflective film on the first glass is simple, production costs are low and mass production can be performed. In addition, the first glass occupies a small volume and a package structure is more compact, so that a packaging size requirement of an SFP+ is easily satisfied.

### BRIEF DESCRIPTION OF DRAWINGS

FIG. 1 is a configuration diagram of network devices in a passive optical network;
FIG. 2 is a diagram of a networking structure in which a GPON optical module coexists with an XGPON optical module and a WDM module is externally disposed;
FIG. 3 is a schematic diagram of a typical package structure of a bi-directional optical subassembly;
FIG. 4 is a schematic diagram of a typical package structure of a transmitter optical subassembly;
FIG. 5 is a schematic diagram of a typical package structure of a receiver optical subassembly;
FIG. 6 is a schematic diagram of a structure of a receiver optical subassembly;
FIG. 7 is a schematic diagram of a structure in which a receiver optical subassembly is packaged by using a transistor-outline can according to an embodiment of this application;
FIG. 8 is a schematic diagram of a structure in which a receiver optical subassembly is packaged by using a packaging box according to an embodiment of this application;
FIG. 9 is a schematic diagram of a structure of a combo transceiver subassembly according to an embodiment of this application;
FIG. 10 is a schematic diagram of a structure in which a transmitter optical subassembly is packaged by using a transistor-outline can according to an embodiment of this application;
FIG. 11 is a schematic diagram of a structure in which a transmitter optical subassembly is packaged by using a packaging box according to an embodiment of this application;
FIG. 12 is a schematic diagram of a structure of another implementation of a combo transceiver subassembly according to an embodiment of this application;
FIG. 13 is a schematic diagram of a structure in which a receiver optical subassembly receives optical signals of three wavelengths according to an embodiment of this application; and
FIG. 14 is a schematic diagram of a structure in which a transmitter optical subassembly sends optical signals of three wavelengths according to an embodiment of this application.

### DESCRIPTION OF EMBODIMENTS

The embodiments of this application relate to a receiver optical subassembly, a transmitter optical subassembly, a combo transceiver subassembly, a combo optical module, and a passive optical network system. The following briefly describes concepts in the foregoing embodiments.

Passive optical network (Passive Optical Network, PON): A passive optical network means that an optical distribution network (ODN) exists between an OLT and an ONU, and there is no active electronic device.

Optical distribution network (Optical distribution network, ODN): An ODN is a fiber-to-the-home optical cable network based on a PON device, and functions to provide an optical transmission channel between an OLT and an ONU.

Wavelength division multiplexing (wavelength division multiplexing, WDM): Wavelength division multiplexing refers to a technology in which two or more optical carrier signals (carrying various information) of different wavelengths are combined at a transmit end by using a multiplexer (also referred to as an optical multiplexer), and coupled to a same optical fiber on an optical line for transmission. At a receive end, optical carriers of various wavelengths are separated by a demultiplexer (also referred to as an optical demultiplexer), and then an optical receiver further performs processing to restore original signals. This technology of simultaneously transmitting two or more optical signals of different wavelengths in a same optical fiber is referred to as wavelength division multiplexing.

Optical transmission module: referred to as an optical module for short, and including two parts: a bi-directional optical subassembly (Bi-directional Optical subassembly, BOSA) and an electrical subassembly (Electrical Subassembly, ESA). A pin of the bi-directional optical subassembly and a peripheral electrical subassembly (ESA) are electrically connected, and then mounted into an optical module housing, to form the optical transmission module.

The bidirectional optical subassembly (Bi-directional Optical subassembly, BOSA) mainly includes a transmitter optical subassembly (Transmitter Optical subassembly, TOSA) and a receiver optical subassembly (Receiver Optical subassembly, ROSA).

The transmitter optical subassembly (Transmitter Optical subassembly, TOSA): The TOSA functions to convert an electrical signal into an optical signal and input the optical signal into an optical fiber for transmission.

The receiver optical subassembly (Receiver Optical subassembly, ROSA): The ROSA functions to receive an optical signal transmitted from an optical fiber and convert the optical signal into an electrical signal.

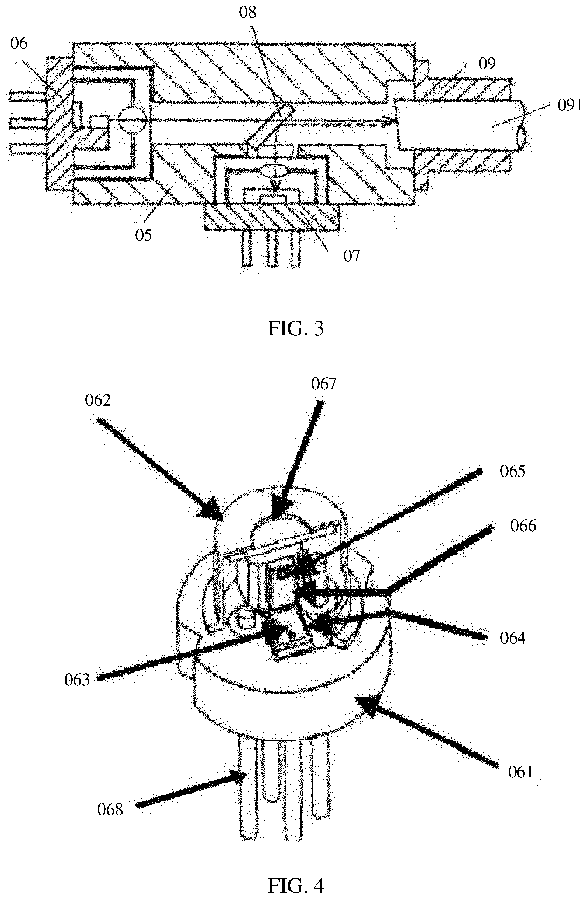

An important subassembly of the optical module is the bidirectional optical subassembly (BOSA), which can be used to send and receive an optical signal. A typical BOSA structure is shown in FIG. 3, including a housing 05, a transmitter optical subassembly (Tosa) 06 and a receiver optical subassembly (ROSA) 07 embedded in the housing 05, an optical demultiplexer 08 disposed in the housing 05, and an optical fiber connecting ferrule 09 and an optical fiber 091 connected at an end of the housing 05. The transmitter optical subassembly 06 functions to convert an electrical signal into an optical signal and input the optical signal into the optical fiber 091 for transmission. The receiver optical subassembly 07 functions to receive an optical signal transmitted from the optical fiber and convert the optical signal into an electrical signal. In general, due to different wavelengths of transmitted light and received light, it is necessary to place the optical demultiplexer 08 in a metal housing to separate these two wavelengths. The optical demultiplexer functions to transmit light of some wavelengths and reflect light of other wavelengths at the same time. An optical transmitting path is shown by a solid line arrow in FIG. 3. Light emitted from the transmitter optical subassembly 06 transmits in a straight line when passing through the optical demultiplexer 08, and then enters the optical fiber 091 for transmission. An optical receiving path is shown by a dashed line arrow in FIG. 3. An optical signal transmitted from the optical fiber 091 is reflected when passing through the optical demultiplexer 08, and the receiver optical subassembly 07 is exactly on a light reflecting path, to receive the optical signal.

Due to material features of devices such as a transmitter (a laser diode) and a receiver (a photodiode), a separate TOSA and a separate ROSA are sensitive to water vapor and oxygen in an environment. If the TOSA and the ROSA are exposed to a corresponding gas, subassembly performance may deteriorate over time, causing a fault. Therefore, a transistor-outline can (Transistor-Outline can, TO CAN) is generally used for packaging, and an airtight process is adopted in a production process. A specific method is: in a pure nitrogen environment, a cap and a header are welded.

Specifically, FIG. 4 is a structural packaging diagram of a TOSA. The TOSA mainly includes a metal header (Header) 061 with a pin, a cap (Cap) 062, a photodiode (photo diode, PD) 063 disposed on the header, a submount (Submount) 064, a laser diode (LD) 065, a heat sink (Heat Sink) 066, and a window (window) 067. A pin 068 on the header is connected to a signal electrode on the laser diode 065 by using a gold wire, so that an external electrical signal can be transmitted to the laser diode 065 for electro-to-optic conversion.

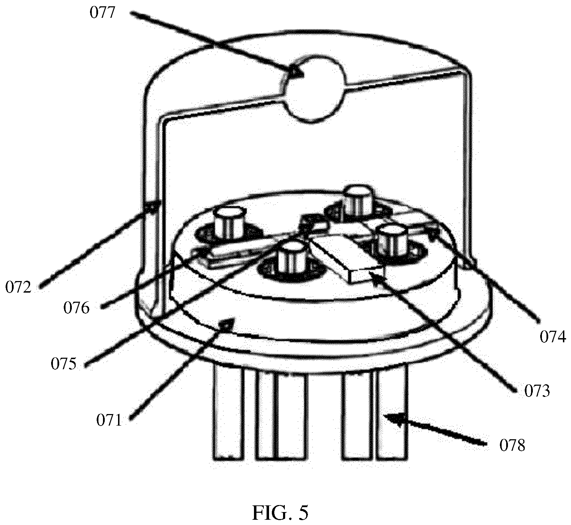

FIG. 5 is a structural packaging diagram of a ROSA. The ROSA mainly includes a metal header (Header) 071 with a pin, a cap (Cap) 072, a trans-impedance amplifier (Trans-impedance amplifier, TIA) 073, a submount 074, a photodiode (Photodiode) 075, a capacitor 076, and a spherical lens 077. A signal obtained after optic-to-electric conversion of the photodiode 075 can be output by using the pin 078 on the header.

An external structure of a WDM module leads to high construction costs, large occupied equipment room space, complex construction and cabling, and difficult management and maintenance. Therefore, the WDM module may be embedded in the optical module.

The following uses a GPON as an example for description. An EPON scenario may be similar.

An optical module that can simultaneously support any two different transmission rates may be referred to as a combo (Combo) optical module. For example, the combo optical module may simultaneously support any two of a GPON, an XGPON, a 25G GPON, and a 50G GPON, or simultaneously support any two of an EPON, a 10G EPON, a 25G EPON, and a 50G EPON. It can be understood that the combo optical module may also be referred to as an optical module.

For a wavelength of an optical signal, an optical line terminal in a GPON uses a wavelength of 1490 nm for transmitting and uses a wavelength of 1310 nm for receiving, and an optical line terminal in an XGPON uses a wavelength of 1577 nm for transmitting and uses a wavelength of 1270 nm for receiving. Then, in the combo transceiver subassembly, optical signals of these two wavelengths need to be received and sent, and coexist through a specific structure design. This requires a series of WDM modules (an optical multiplexer or an optical demultiplexer) to combine and separate light of the two wavelengths. In addition, it should be considered that a specific narrow-band filter should be used before a receiver, to further filter out other possible stray light. For example, A 0° filter that can allow only a 1270 band to pass through can be placed before a 1270-nm receiver, and a 0° filter that can allow only a 1310 band to pass through can be placed before a 1310-nm receiver.

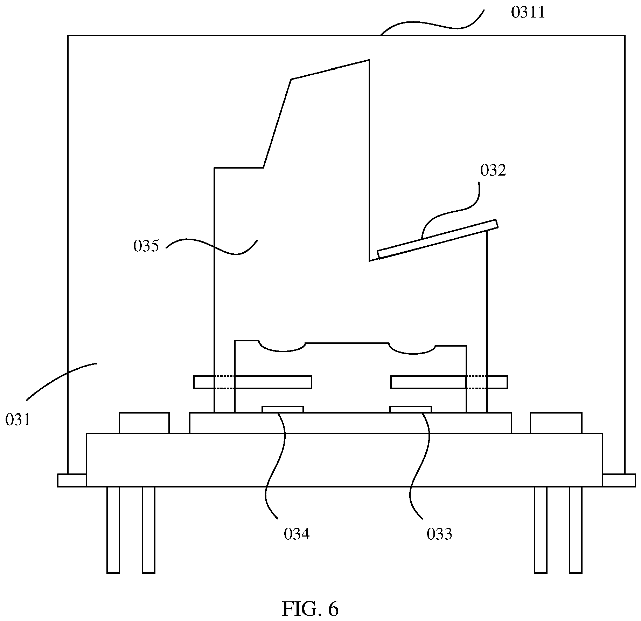

FIG. 6 is a schematic diagram of a structure of a receiver optical subassembly. The receiver optical subassembly includes a first transistor-outline can 031, and a light incident opening 0311 is disposed on the first transistor-outline can 031. A first optical demultiplexer 032, a first optical receiver 033, a second optical receiver 034, and an optical lens group 035 are packaged in the first transistor-outline can 031. The first optical receiver 033 can receive an optical signal of a first wavelength, the second optical receiver 034 can receive an optical signal of a second wavelength, and light entering from the light incident opening 0311 can enter the first optical demultiplexer 032. The first optical demultiplexer 032 is configured to transmit the optical signal of the first wavelength and reflect the optical signal of the second wavelength. The first optical receiver 033 is disposed on a light transmission path of the first optical demultiplexer 032. The optical lens group 035 is disposed on a light reflecting path of the first optical demultiplexer 032. The optical lens group 035 is configured to guide, to the second optical receiver 034, the optical signal of the second wavelength that is reflected by the first optical demultiplexer 032.

The receiver optical subassembly implements light splitting by using the optical lens group 035. Although relatively small-scale packaging can be implemented, the optical lens group 035 is difficult to produce, costs are high, a processing technique requirement is high, and mass production is difficult. In addition, the optical lens group 035 has a relatively large volume, and it is difficult to satisfy a packaging size requirement of small form-factor pluggables (Small Form-factor Pluggables, SFP+).

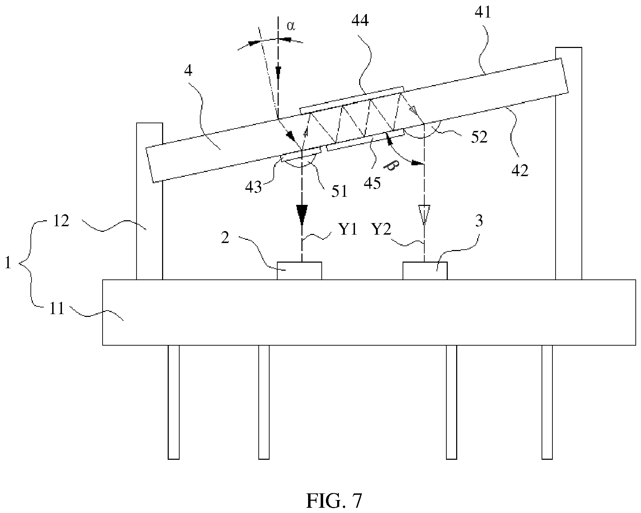

To resolve the foregoing problem, as shown in FIG. 7, an embodiment of this application provides a receiver optical subassembly, including an optical receiving housing 1. A first optical receiver 2, a second optical receiver 3, and a first glass 4 are packaged in the optical receiving housing 1, and the first glass 4 is disposed obliquely relative to an optical receiving path X1 of the first optical receiver 2 and an optical receiving path X2 of the second optical receiver 3 (that is, an included angle β is formed between the first glass 4 and X1 and between the first glass 4 and X2, and the included angle β is greater than 0° and less than 90°). The first glass 4 includes a light incident surface 41 and a light emergent surface 42, and the first optical receiver 2 and the second optical receiver 3 are disposed opposite to the light emergent surface 42 of the first glass 4. A first light splitting film 43 is disposed on the light emergent surface 42 of the first glass 4, the first light splitting film 43 is located on the optical receiving path of the first optical receiver 2, and the first light splitting film 43 can transmit an optical signal of a first wavelength and reflect an optical signal of a second wavelength. A first reflective film 44 is disposed on a part of the light incident surface 41 of the first glass 4. The optical signal of the first wavelength and the optical signal of the second wavelength are sent into the first glass 4 from the light incident surface 41, and refracted inside the first glass 4 and then sent to the first light splitting film 43. The optical signal of the first wavelength is transmitted through the first light splitting film 43 and enters the first optical receiver 2, and the optical signal of the second wavelength is sequentially reflected by the first light splitting film 43 and the first reflective film 44 and then sent from the light emergent surface 42, and enters the second optical receiver 3. The first light splitting film 43 is disposed on the optical receiving path of the first optical receiver 2, so that the optical signal of the first wavelength can enter the first optical receiver 2 after being transmitted by the first light splitting film 43. The first reflective film 44 avoids a light incident opening position of the optical signal on the light incident surface 41, so that the optical signal can be sent into the first glass 4 from the light incident surface 41. The second reflective film 45 avoids the optical receiving path of the second optical receiver 3, so that the optical signal of the second wavelength can enter the second optical receiver 3 after being sent from the light emergent surface 42.

According to the receiver optical subassembly provided in this embodiment of this application, the first glass 4 is used, the first reflective film 44 is disposed on the light incident surface 41 of the first glass 4, and the first light splitting film 43 and the second reflective film 45 are disposed on the light emergent surface 42. In addition, the first glass 4 is disposed obliquely relative to the optical receiving paths. Therefore, after the optical signal of the first wavelength and the optical signal of the second wavelength are sent into the first glass 4 along an optical receiving direction, the optical signal of the first wavelength may be transmitted through the first light splitting film 43 and enter the first optical receiver 2, and the optical signal of the second wavelength is sequentially reflected by the first light splitting film 43 and the first reflective film 44 and then sent from the light emergent surface 42, and enters the second optical receiver 3. In this way, an emergent position of the optical signal of the second wavelength may be separated from an emergent position of the optical signal of the first wavelength by a specific distance, thereby implementing receiving of optical signals of different wavelengths based on the wavelengths. In addition, because a structure of disposing the light splitting film and the reflective film on the first glass 4 is simple, production costs are low and mass production can be performed. In addition, the first glass 4 occupies a small volume and a package structure is more compact, so that a packaging size requirement of an SFP+ is easily satisfied.

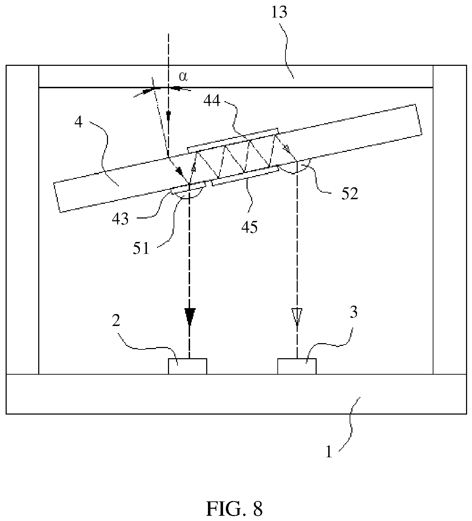

When a mounting spacing between the first optical receiver 2 and the second optical receiver 3 is relatively large, a second reflective film 45 may be further disposed on the light emergent surface 42 of the first glass 4, and the second reflective film 45 is disposed by keeping away from the optical receiving path of the second optical receiver 3. In addition, the second reflective film 45 is located between the optical receiving path of the first optical receiver 2 and the optical receiving path of the second optical receiver 3. After the optical signal of the second wavelength is reflected by the first light splitting film 43, the optical signal is reflected between the first reflective film 44 and the second reflective film 45 for a plurality of times to keep a specific distance, and finally sent from the light emergent surface 42 and enters the second optical receiver 3. For example, after being reflected by the first light splitting film 43, the optical signal of the second wavelength may be sequentially reflected by the first reflective film 44 and the second reflective film 45, and is sent from the light emergent surface 42 after being reflected by the first reflective film 44. To be specific, the optical signal of the second wavelength is reflected by the first reflective film 44 twice and is reflected by the second reflective film 45 once. Alternatively, as shown in FIG. 8, the optical signal of the second wavelength may be reflected by the first reflective film 44 for four times and reflected by the second reflective film 45 for three times. It can be understood that a quantity of times the optical signal of the second wavelength is reflected by the first reflective film 44 is one more than a quantity of times the optical signal of the second wavelength is reflected by the second reflective film 45.

Specifically, an optical signal of a wavelength of 1310±20 nanometers and an optical signal of a wavelength of 1270±10 nanometers are usually used as received signals, and the wavelengths of the two signals are relatively close to each other. As can be known according to the Fresnel reflection principle, when an angle of incidence of incident light is larger, a width of a guard band becomes wider, and a center wavelength shift caused by a change of the angle of incidence is larger. Therefore, when the center wavelength shift occurs, crosstalk easily occurs between the optical signal of the wavelength of 1310±20 nanometers and the optical signal of the wavelength of 1270±10 nanometers, where the wavelengths are similar. To resolve the foregoing problem, an angle of incidence of incident light may be appropriately decreased. To be specific, an angle of incidence α at which the optical signal of the first wavelength and the optical signal of the second wavelength are sent into the first glass 4 is set to be less than 12°. In addition, if the angle of incidence α is excessively small, a reflection angle at which the optical signal of the second wavelength is reflected between the first reflective film 44 and the second reflective film 45 is relatively small, and the optical signal of the second wavelength needs to be reflected for more times to keep a sufficient distance, to satisfy a requirement on a mounting spacing between the first optical receiver 2 and the second optical receiver 3. Reflection for more times causes a relatively large signal loss. Therefore, the angle of incidence α may be set to 8° to 12°. When the angle of incidence α is set to fall within the foregoing range, not only light splitting isolation is ensured, but also a loss of the optical signal of the second wavelength may be controlled within 0.3 dB.

A thickness of the first glass 4 may be selected as 0.2 to 2 millimeters. In an embodiment of this application, the thickness of the first glass 4 may be 1.6 millimeters. Therefore, producing difficulty and costs are low, and an overall size may easily satisfy a packaging size requirement of an SFP+.

As shown in FIG. 7, a first collector lens 51 may be disposed between the light emergent surface 42 of the first glass 4 and the first optical receiver 2, the first collector lens 51 is disposed on the optical receiving path of the first optical receiver 2, and the first collector lens 51 is configured to concentrate the optical signal of the first wavelength in the first optical receiver 2. A second collector lens 52 may be disposed between the light emergent surface 42 of the first glass 4 and the second optical receiver 3, the second collector lens 52 is disposed on the optical receiving path of the second optical receiver 3, and the second collector lens 51 is configured to concentrate the optical signal of the second wavelength in the second optical receiver 3. Therefore, receiving efficiency of the first optical receiver 2 and the second optical receiver 3 can be improved, and an optical loss can be reduced.

To increase transmission intensity of the optical signal, an antireflective film (not shown in the figure) may be disposed on the light emergent surface 42 of the first glass 4, thereby reducing reflection intensity of the optical signal and increasing transmission intensity of the optical signal.

In an embodiment of this application, the receiver optical subassembly may be packaged by using a transistor-outline can. Specifically, as shown in FIG. 7, the optical receiving housing 1 is a transistor-outline can, the transistor-outline can includes a header 11 and a cap 12, both the first optical receiver 2 and the second optical receiver 3 are disposed on the header 11, and the first glass 4 forms a transparent window of the cap 12. Therefore, this is compatible with an existing TO packaging process, to avoid producing a special complex housing, thereby reducing producing costs.

In another embodiment of this application, the receiver optical subassembly may be alternatively packaged by using box packaging. Specifically, as shown in FIG. 8, the optical receiving housing 1 is a packaging box, a transparent window 13 is formed on the packaging box, and the first optical receiver 2, the second optical receiver 3, and the first glass 4 are all disposed in the packaging box; and the light incident surface 41 of the first glass 4 is opposite to the transparent window 13 of the packaging box. In this structure, because the second glass 4 is disposed in the packaging box, a position of the second glass 4 may be adjusted relative to the packaging box. Specifically, a tilt angle and the position of the second glass 4 may be finely adjusted in an active coupling manner, so that the second glass 4 is disposed at a more precise position, and receiving efficiency of the receiver optical subassembly is higher.

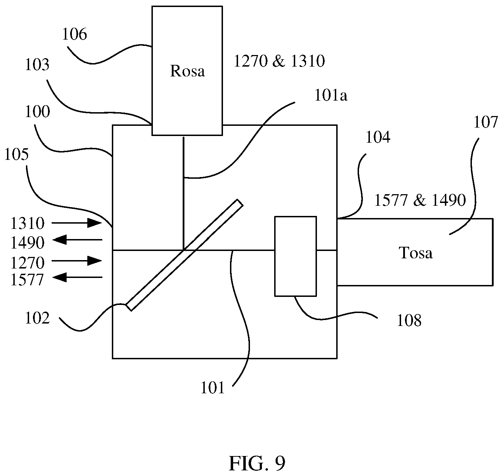

As shown in FIG. 9, an embodiment of this application further provides a combo transceiver subassembly, including:
a combo package housing 100, where an optical transmission channel 101 is disposed in the combo package housing 100, an optical demultiplexer 102 is disposed in the optical transmission channel 101, and an optical receive port 103, an optical transmit port 104, and an optical fiber connection port 105 in communication with the optical transmission channel 101 are disposed on the combo package housing 100; and
a receiver optical subassembly 106, where the receiver optical subassembly 106 is the receiver optical subassembly in any one of the foregoing embodiments, and the receiver optical subassembly 106 is packaged at the optical receive port 103, where
the optical demultiplexer 102 can reflect, to the optical receive port 103, the optical signal of the first wavelength and the optical signal of the second wavelength that enter through the optical fiber connection port 105.

According to the combo transceiver subassembly provided in this embodiment of the application, the optical signal of the first wavelength and the optical signal of the second wavelength transmitted by the optical fiber connection port 105 are reflected when passing through the optical demultiplexer 102, and the receiver optical subassembly is exactly on a light reflecting path, to receive the optical signal. The first glass 4 is used in the receiver optical subassembly, the first reflective film 44 is disposed on the light incident surface 41 of the first glass 4, and the first light splitting film 43 and the second reflective film 45 are disposed on the light emergent surface 42. In addition, the first glass 4 is disposed obliquely relative to the optical receiving paths. Therefore, after the optical signal of the first wavelength and the optical signal of the second wavelength are sent into the first glass 4 along an optical receiving direction, the optical signal of the first wavelength may be transmitted through the first light splitting film 43 and enter the first optical receiver 2, and the optical signal of the second wavelength is sequentially reflected by the first light splitting film 43 and the first reflective film 44 and then sent from the light emergent surface 42, and enters the second optical receiver 3. In this way, an emergent position of the optical signal of the second wavelength may be separated from an emergent position of the optical signal of the first wavelength by a specific distance, thereby implementing receiving of optical signals of different wavelengths based on the wavelengths. In addition, because a structure of disposing the light splitting film and the reflective film on the first glass 4 is simple, production costs are low and mass production can be performed. In addition, the first glass 4 occupies a small volume and a package structure is more compact, so that a packaging size requirement of an SFP+ is easily satisfied.

Specifically, the package structure may be shown in FIG. 9. The optical transmission channel 101 is connected between the optical transmit port 104 and the optical fiber connection port 105, an optical reception channel 101a is further disposed between the optical receive port 103 and the optical transmission channel 101, and the optical demultiplexer 102 is disposed at a junction of the optical transmission channel 101 and the optical reception channel 101a. This optical path has a simple structure and conforms to a producing process of an existing BOSA housing, thus improving producing efficiency. In addition, to collimate an optical path, a collimation lens may be disposed at the optical fiber connection port 105.

In an embodiment of the combo transceiver subassembly of this application, as shown in FIG. 9, there is one optical transmit port 104, and the transmitter optical subassembly 107 is packaged at the optical transmit port 104. An optical signal of a third wavelength and an optical signal of a fourth wavelength that are sent by the transmitter optical subassembly 107 are transmitted in a straight line when passing through the optical demultiplexer 102, and then enter the optical fiber connection port 105 for transmission.

To reduce impact of reflected light in a network on performance of the transmitter optical subassembly, as shown in FIG. 9, an isolator 108 may be disposed in the optical transmission channel 101 between the transmitter optical subassembly 107 and the optical demultiplexer 102.

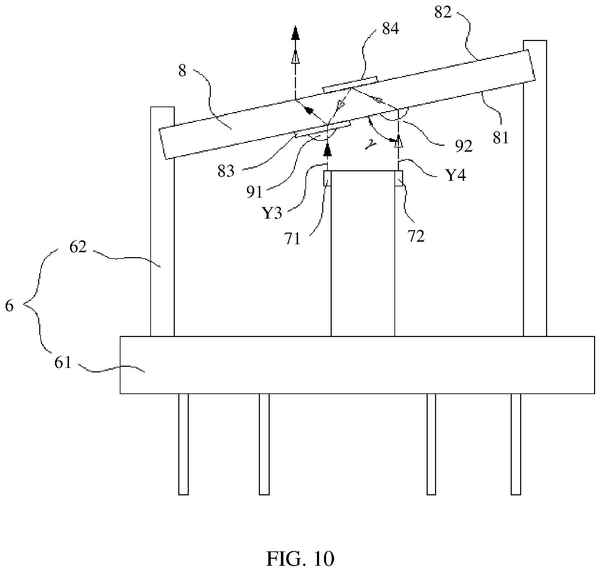

A structure of the transmitter optical subassembly 107 may be shown in FIG. 10. The transmitter optical subassembly includes an optical transmitting housing 6, and a first optical transmitter 71, a second optical transmitter 72, and a second glass 8 packaged in the optical transmitting housing 6. The second glass 8 is disposed obliquely relative to an optical transmission path Y3 of the first optical transmitter 71 and an optical transmission path Y4 of the second optical transmitter 72 (that is, an included angle γ is formed between the second glass 8 and Y3 and between the second glass 8 and Y4, and the included angle γ is greater than 0° and less than 90°). The second glass 8 includes a light incident surface 81 and a light emergent surface 82, and the light incident surface 81 of the second glass 8 is disposed opposite to the first light transmitter 71 and the second light transmitter 72. A second light splitting film 83 is disposed on the light incident surface 81 of the second glass 8, and a third reflective film 84 is disposed on the light emergent surface 82 of the second glass 8. The second light splitting film 83 is located on the transmission path of the first light transmitter 71 and on a reflecting path of the third reflective film 84. The second light splitting film 83 can transmit an optical signal of a third wavelength and reflect an optical signal of a fourth wavelength. The optical signal of the third wavelength that is sent by the first optical transmitter 71 is transmitted through the second light splitting film 83 and then enters into the second glass 8, and is refracted inside the second glass 8 and then sent from the light emergent surface 82 of the second glass 8. The optical signal of the fourth wavelength that is sent by the second optical transmitter 72 enters into the second glass 8, and is sequentially reflected by the third reflective film 84 and the second light splitting film 83 and then sent by the light emergent surface 82 of the second glass 8. An emergent position of the optical signal of the third wavelength overlaps an emergent position of the optical signal of the fourth wavelength. In this way, the transmitter optical subassembly packages the two optical transmitters into the same optical transmitting housing 6, and the second glass 8 for multiplexing is disposed in the optical transmitting housing 6, so that the optical signal of the third wavelength and the optical signal of the fourth wavelength are multiplexed and sent in a same position. This structure can be applied to an existing BOSA package structure. Therefore, there is no need to produce a special housing, thereby reducing production costs, simplifying a packaging process, and satisfying a standard size requirement of an existing optical module. In addition, this structure is simple, an optical path is short, and coupling difficulty is low.

When a mounting spacing between the first optical transmitter 71 and the second optical transmitter 72 is relatively large, a fourth reflective film 85 may be further added on the light incident surface of the second glass 8. The fourth reflective film 85 is disposed by keeping away from the optical transmitting path of the first optical transmitter 71 and the optical transmitting path of the second optical transmitter 72, and is located between the optical transmitting path of the first optical transmitter 71 and the optical transmitting path of the second optical transmitter 72. After entering the second glass 8, the optical signal of the fourth wavelength is sequentially reflected between the third reflective film 84 and the fourth reflective film 85 for a plurality of times, and then enters the second light splitting film 83. The optical signal of the fourth wavelength is reflected by the second light splitting film 83 and then sent by the light emergent surface 82 of the second glass 8.

As shown in FIG. 10, a first collimation lens 91 may be disposed between the light emergent surface of the second glass 8 and the first optical transmitter 71, and the first collimation lens 91 is configured to convert the optical signal of the third wavelength into collimated light. A second collimation lens 92 is disposed between the light emergent surface 82 of the second glass 8 and the second optical transmitter 72, and the second collimation lens 92 is configured to convert the optical signal of the fourth wavelength into collimated light. Therefore, a transmission direction of the optical signal can be corrected, and an optical loss can be reduced.

To increase transmission intensity of the optical signal, an antireflective film (not shown in the figure) may be disposed on the light incident surface 41 of the first glass 4, thereby reducing reflection intensity of the optical signal and increasing transmission intensity of the optical signal.

Specifically, as shown in FIG. 10, the optical transmitting housing 6 may be a transistor-outline can, the transistor-outline can includes a header 61 and a cap 62, both the first optical transmitter 71 and the second optical transmitter 72 are disposed on the header 71, and the second glass 8 forms a transparent window of the cap 62. Therefore, this is compatible with an existing TO packaging process, to avoid producing a special complex housing, thereby reducing producing costs.

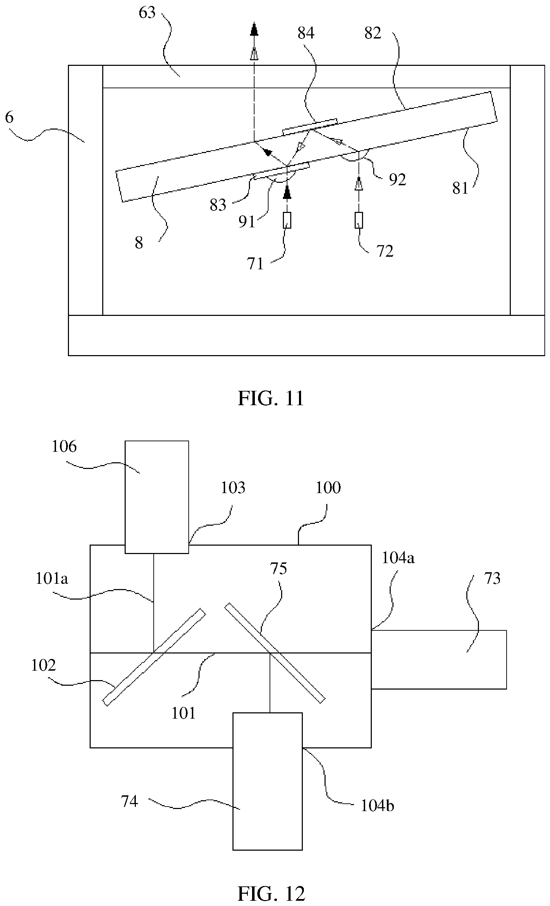

The transmitter optical subassembly may be alternatively packaged in a box packaging manner. Specifically, as shown in FIG. 11, the optical transmitting housing 6 may also be a packaging box, and a transparent window 63 is formed on the packaging box. The first optical transmitter 71, the second optical transmitter 72, and the second glass 8 are all disposed in the packaging box. The light emergent surface of the second glass 8 is opposite to the transparent window 63 of the packaging box. In this structure, because the second glass 8 is disposed in the packaging box, a position may be adjusted relative to the packaging box. Specifically, a tilt angle and the position of the second glass 8 may be finely adjusted in an active coupling manner, so that the second glass 8 is disposed at a more precise position, and transmitting efficiency of the transmitter optical subassembly is higher.

In another embodiment of the combo transceiver subassembly in this application, as shown in FIG. 12, there are two optical transmit ports: a first optical transmit port 104a and a second optical transmit port 104b, and the transmitter optical subassembly includes a third optical transmitter 73, a fourth optical transmitter 74, and an optical multiplexer 75. The third optical transmitter 73 is packaged in the first optical transmit port 104a, the fourth optical transmitter 74 is packaged in the second optical transmit port 104b, and the optical multiplexer 75 is disposed on the optical transmission channel 101. The optical multiplexer 75 can combine the optical signal of the third wavelength that is sent by the third optical transmitter 73 and the optical signal of the fourth wavelength that is sent by the fourth optical transmitter 74, and send the combined optical signals to the optical fiber connection port 105. This structure can also implement multiplexing and sending of the optical signal of the third wavelength and the optical signal of the fourth wavelength at a same position.

Specifically, as shown in FIG. 12, the optical multiplexer 75 can be a glass optical multiplexer 75, the third optical transmitter 73 is opposite to the optical fiber connection port 105, and a transmission direction of the fourth optical transmitter 74 is perpendicular to a transmission direction of the third optical transmitter 73. The optical signal of the third wavelength that is sent by the third optical transmitter 73 is transmitted by the glass optical multiplexer 75 and then enters the optical fiber connection port 105, and the optical signal of the fourth wavelength that is sent by the fourth optical transmitter 74 is reflected by the glass optical multiplexer 75 and then enters the optical fiber connection port 105.

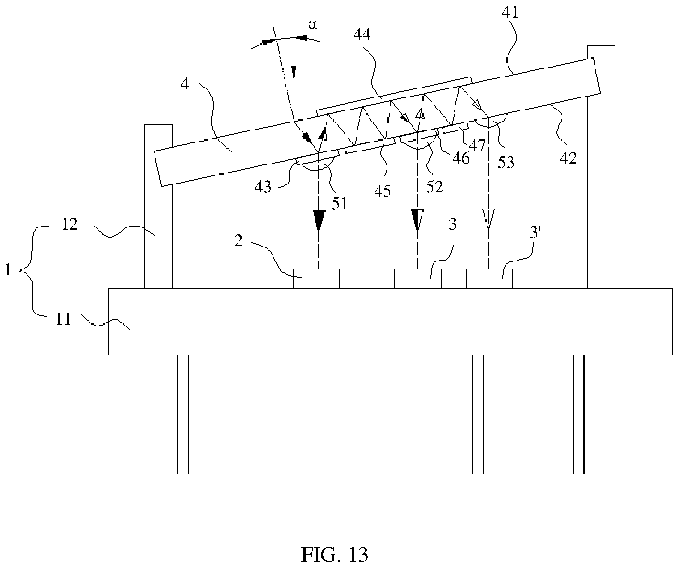

It should be noted that, when incident optical signals include optical signals of different wavelengths such as three, four, and five wavelengths, the solution of the receiver optical subassembly in this application is also applicable, and only a quantity of optical receivers and a quantity of light splitting films need to be correspondingly increased. For example, when incident optical signals include the optical signal of the first wavelength, the optical signal of the second wavelength, and an optical signal of a fifth wavelength, as shown in FIG. 13, a third light splitting film 46 and a third optical receiver 3' may be added. The third light splitting film 46 is disposed on the light emergent surface 42 of the first glass 4 and is located at an emergent position of the optical signal of the second wavelength. The first light splitting film 43 can transmit the optical signal of the first wavelength, and can reflect the optical signal of the second wavelength and the optical signal of the fifth wavelength. The third light splitting film 46 can transmit the optical signal of the second wavelength and reflect the optical signal of the fifth wavelength. Therefore, after the optical signals of the three wavelengths are sent into the first glass 4 along an optical receiving direction, the optical signal of the first wavelength may transmit through the first light splitting film 43 and enter the first optical receiver 2, and the optical signal of the second wavelength and the optical signal of the fifth wavelength may be reflected by the first light splitting film 43, and sequentially reflected between the first reflective film 44 and the second reflective film 45 and then enter the third light splitting film 46. The optical signal of the second wavelength may pass through the third light splitting film 46 and enter the second optical receiver 3. The optical signal of the fifth wavelength may be reflected by the third light splitting film 46 to the first reflective film 44 and reflected by the first reflective film 44 to the light emergent surface 42 for emission, and enter the third optical receiver 3'.

When the spacing between the second optical receiver 3 and the third optical receiver 3' is relatively large, a fifth reflective film 47 can also be added on the light emergent surface 42. The fifth reflecting film 47 avoids an optical receiving path of the second optical receiver 3 and an optical receiving path of the third optical receiver 3', and is located between the optical receiving path of the second optical receiver 3 and the optical receiving path of the third optical receiver 3'. The optical signal of the fifth wavelength is reflected between the first reflecting film 44 and the fifth reflecting film 47 for a plurality of times and then is sent from the light emergent surface 42 and enters the third optical receiver 3'.

Alternatively, a third collector lens 53 may be disposed between the light emergent surface 42 of the first glass 4 and the third optical receiver 3', and the third collector lens 53 is configured to concentrate the optical signal of the fifth wavelength in the third optical receiver 3'.

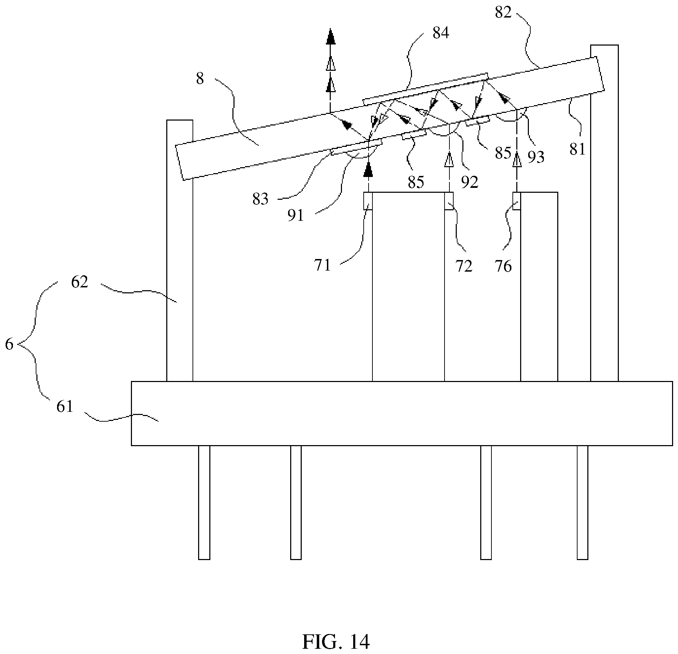

Similarly, when sent optical signals include optical signals of different wavelengths such as three, four, or five wavelengths, the solution of the transmitter optical subassembly of this application is also applicable. For example, when the optical signal of the third wavelength, the optical signal of the fourth wavelength, and an optical signal of a sixth wavelength need to be sent, as shown in FIG. 14, a fifth optical transmitter 76 may be added. The fifth optical transmitter 76 is configured to send the optical signal of the sixth wavelength. A sixth reflective film 85 may also be disposed on the light incident surface 81 of the second glass 8, and the sixth reflective film 85 avoids an emergent path of the second optical transmitter 72. The optical signal of the sixth wavelength is sequentially reflected by the third reflective film 84 and the sixth reflecting film 85 and then enters the second light splitting film 83, and is reflected by the second light splitting film 83 and then sent from the light emergent surface 82 of the second glass 8. An emergent position of the optical signal of the sixth wavelength, an emergent position of the optical signal of the third wavelength, and an emergent position of the optical signal of the fourth wavelength overlap, to implement multiplexing and sending of the optical signals of the three wavelengths.

To correct a transmission direction of the optical signal of the sixth wavelength, a third collimation lens 93 may be further disposed between the light emergent surface 82 of the second glass 8 and the fifth optical transmitter 76, and the third collimation lens 93 is configured to convert the optical signal of the sixth wavelength into collimated light.

The combo transceiver subassembly in any one of the foregoing embodiments and a peripheral electrical subassembly (ESA) are electrically connected, and then mounted into an optical module housing, to form a combo optical module.

The combo optical module is connected to a board and placed in a subrack, to form an optical line terminal.

Similarly, the combo optical module may be applied to an optical network unit to form an optical network unit that can simultaneously support optical signals of two wavelengths.

When the optical line terminal is applied to a passive optical network system, the passive optical network system includes:
the optical line terminal;
an optical distribution network, where the optical distribution network is connected to the optical line terminal; and
a plurality of optical network units, where the plurality of optical network units are connected to the optical distribution network.

According to the combo optical module, the optical transmission module, and the passive optical network system provided in the embodiments of this application, the first glass 4 is used in the receiver optical subassembly, the first reflective film 44 is disposed on the light incident surface 41 of the first glass 4, and the first light splitting film 43 and the second reflective film 45 are disposed on the light emergent surface 42. In addition, the first glass 4 is disposed obliquely relative to the optical receiving paths. Therefore, after the optical signal of the first wavelength and the optical signal of the second wavelength are sent into the first glass 4 along an optical receiving direction, the optical signal of the first wavelength may be transmitted through the first light splitting film 43 and enter the first optical receiver 2, and the optical signal of the second wavelength is sequentially reflected by the first light splitting film 43 and the first reflective film 44 and then sent from the light emergent surface 42, and enters the second optical receiver 3. In this way, an emergent position of the optical signal of the second wavelength may be separated from an emergent position of the optical signal of the first wavelength by a specific distance, thereby implementing receiving of optical signals of different wavelengths based on the wavelengths. In addition, because a structure of disposing the light splitting film and the reflective film on the first glass 4 is simple, production costs are low and mass production can be performed. In addition, the first glass 4 occupies a small volume and a package structure is more compact, so that a packaging size requirement of an SFP+ is easily satisfied.

Optical modules of at least some of the plurality of optical network units may be GPON optical modules, and optical modules of at least some of the plurality of optical network units may be XGPON optical modules; or
optical modules of at least some of the plurality of optical network units may be EPON optical modules, and optical modules of at least some of the plurality of optical network units may be lOG-EPON optical modules; or
optical modules of at least some of the plurality of optical network units are the foregoing combo optical module.

In the descriptions of this specification, the specific features, structures, materials, or characteristics may be combined in a proper manner in any one or more of the embodiments or examples.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A receiver optical subassembly, comprising an optical receiving housing, wherein a first optical receiver, a second optical receiver, and a first glass are packaged in the optical receiving housing;
the first glass is disposed obliquely relative to optical receiving paths of the first optical receiver and the second optical receiver;
the first glass comprises a light incident surface and a light emergent surface, and the first optical receiver and the second optical receiver are disposed opposite to the light emergent surface of the first glass;
a first light splitting film is disposed on the light emergent surface of the first glass, and the first light splitting film is located on the optical receiving path of the first optical receiver, and can transmit an optical signal of a first wavelength and reflect an optical signal of a second wavelength;
a first reflective film is disposed on a part of the light incident surface of the first glass; and
the optical signal of the first wavelength and the optical signal of the second wavelength are sent into the first glass from the light incident surface, refracted inside the first glass, and then sent to the first light splitting film, the optical signal of the first wavelength is transmitted through the first light splitting film and enters the first optical receiver, and the optical signal of the second wavelength is sequentially reflected by the first light splitting film and the first reflective film and then sent from the light emergent surface, and enters the second optical receiver.

2. The receiver optical subassembly according to claim 1, wherein a second reflective film is further disposed on the light emergent surface of the first glass, and the second reflective film is disposed by keeping away from the optical receiving path of the second optical receiver, and is located between the optical receiving path of the first optical receiver and the optical receiving path of the second optical receiver; and after the optical signal of the second wavelength is reflected by the first light splitting film, the optical signal is sequentially reflected between the first reflective film and the second reflective film and sent from the light emergent surface, and enters the second optical receiver.

3. The receiver optical subassembly according to claim 1 or 2, wherein an angle of incidence at which the optical signal of the first wavelength and the optical signal of the second wavelength are sent into the first glass is less than or equal to 12°.

4. The receiver optical subassembly according to any one of claims 1 to 3, wherein a first collector lens is disposed between the light emergent surface of the first glass and the first optical receiver, and the first collector lens is disposed on the optical receiving path of the first optical receiver; and a second collector lens is disposed between the light emergent surface of the first glass and the second optical receiver, and the second collector lens is disposed on the optical receiving path of the second optical receiver.

5. The receiver optical subassembly according to any one of claims 1 to 4, wherein the optical receiving housing is a transistor-outline can, the transistor-outline can comprises a header and a cap, both the first optical receiver and the second optical receiver are disposed on the header, and the first glass forms a transparent window of the cap.

6. The receiver optical subassembly according to any one of claims 1 to 4, wherein the optical receiving housing is a packaging box, a transparent window is formed on the packaging box, and the first optical receiver, the second optical receiver, and the first glass are all disposed in the packaging box; and the light incident surface of the first glass is opposite to the transparent window of the packaging box.

7. A combo transceiver subassembly, comprising:
a combo package housing, wherein an optical transmission channel is disposed in the combo package housing, an optical demultiplexer is disposed in the optical transmission channel, an optical receive port, an optical transmit port, and an optical fiber connection port in communication with the optical transmission channel are disposed on the combo package housing; and
a receiver optical subassembly, wherein the receiver optical subassembly is the receiver optical subassembly according to any one of claims 1 to 6, and the receiver optical subassembly is packaged at the optical receive port; and
the optical demultiplexer can reflect, to the optical receive port, an optical signal of a first wavelength and an optical signal of a second wavelength that enter through the optical fiber connection port.

8. The combo transceiver subassembly according to claim 7, further comprising a transmitter optical subassembly, wherein the transmitter optical subassembly is packaged at the optical transmit port, and comprises an optical transmitting housing, and a first optical transmitter, a second optical transmitter, and a second glass that are packaged in the optical transmitting housing; the second glass is disposed obliquely relative to optical transmitting paths of the first optical transmitter and the second optical transmitter; the second glass comprises a light incident surface and a light emergent surface, and the light incident surface of the second glass is disposed opposite to the first optical transmitter and the second optical transmitter; a second light splitting film is disposed on the light incident surface of the second glass; a third reflective film is disposed on a part of the light emergent surface of the second glass; the second light splitting film is located on the transmitting path of the first optical transmitter and located on a reflecting path of the third reflective film; the second light splitting film can transmit an optical signal of a third wavelength and can reflect an optical signal of a fourth wavelength;
the optical signal of the third wavelength that is sent by the first optical transmitter is transmitted by the second light splitting film, then enters the second glass, and is refracted inside the second glass and then sent from the light emergent surface of the second glass; the optical signal of the fourth wavelength that is sent by the second optical transmitter enters the second glass, and is sequentially reflected by the second reflective film and the second light splitting film and then sent from the light emergent surface of the second glass; and an emergent position of the optical signal of the third wavelength overlaps an emergent position of the optical signal of the fourth wavelength.

9. The combined transceiver assembly according to claim 8, wherein a fourth reflective film is further disposed on the light incident surface of the second glass, and the fourth reflective film is disposed by keeping away from the optical transmitting path of the first optical transmitter and the optical transmitting path of the second optical transmitter, and is located between the optical transmitting path of the first optical transmitter and the optical transmitting path of the second optical transmitter; after the optical signal of the fourth wavelength enters the second glass, the optical signal is sequentially reflected between the third reflective film and the fourth reflective film and then enters the second light splitting film; and the optical signal of the fourth wavelength is reflected by the second light splitting film and then sent from the light emergent surface of the second glass.

10. The combo transceiver subassembly according to any one of claims 7 to 9, wherein the optical transmitting housing is a transistor-outline can, the transistor-outline can comprises a header and a cap, both the first optical transmitter and the second optical transmitter are disposed on the header, and the second glass forms a transparent window of the cap.

11. The combo transceiver subassembly according to claim 7, further comprising a transmitter optical subassembly, wherein the optical transmit assembly comprises a third optical transmitter, a fourth optical transmitter, and an optical multiplexer; a first optical transmit port and a second optical transmit port are disposed on the combo package housing; the third optical transmitter is packaged at the first optical transmit port; the fourth optical transmitter is packaged at the second optical transmit port; the optical multiplexer is disposed on the optical transmission channel; and the optical multiplexer can combine the optical signal of the third wavelength that is sent by the third optical transmitter and the optical signal of the fourth wavelength that is sent by the fourth optical transmitter, and send the combined optical signals to the optical fiber connection port.

12. The combo transceiver subassembly according to claim 11, wherein the optical multiplexer is a glass optical multiplexer, the optical signal of the third wavelength that is sent by the third optical transmitter is transmitted by the glass optical multiplexer and then enters the optical fiber connection port, and the optical signal of the fourth wavelength that is sent by the fourth optical transmitter is reflected by the glass optical multiplexer and then enters the optical fiber connection port.

13. A combo optical module, comprising the receiver optical subassembly according to any one of claims 1 to 6, or comprising the combo transceiver subassembly according to any one of claims 7 to 12.

14. A communications apparatus, comprising the combo optical module according to claim 13.

15. The communications apparatus according to claim 14, wherein the communications apparatus is an optical line terminal or an optical network unit.

16. A passive optical network system, comprising:
an optical line terminal, comprising the combo optical module according to claim 13;
an optical distribution network, connected to the optical line terminal; and
a plurality of optical network units, connected to the optical distribution network.

17. The passive optical network system according to claim 16, wherein
optical modules of at least some of the plurality of optical network units are GPON optical modules, and optical modules of at least some of the plurality of optical network units are XGPON optical modules; or
optical modules of at least some of the plurality of optical network units are EPON optical modules, and optical modules of at least some of the plurality of optical network units are 10G-EPON optical modules; or
optical modules of at least some of the plurality of optical network units each are the combo optical module according to claim 13.
